# EUROPEAN PATENT APPLICATION

(11) **EP 4 817 732 A1**
(43) Date of publication of application: **07.10.2026**
(21) Application number: 25167938.7
(22) Date of filing: 02.04.2025
(51) Int. Cl.: B01J 20/18, B01J 20/04, B01J 20/12, B01J 20/30, B01J 20/32, B01D 53/02, C01F 11/46

(54) **EFFICIENT ADSORBENT FOR DIOXINS AND HEAVY METALS IN WASTE GAS FROM MUNICIPAL SOLID WASTE INCINERATION AND PREPARATION METHOD THEREOF**

(71) Applicant: Guangzhou Xincai Technology Co., Ltd., Guangzhou city (CN)
(72) Inventor: MU, Jingfang, Guangzhou city (CN); LI, Xiaoming, Guangzhou city (CN); LONG, Shunrong, Guangzhou city (CN); CUI, Wangwang, Guangzhou city (CN)
(74) Representative: Valet Patent Services Limited

(57) **Abstract**

The present invention discloses an efficient adsorbent for dioxins and heavy metals in waste gas from municipal solid waste incineration and a preparation method thereof, belonging to the field of waste gas treatment technology. The preparation method of adsorbent of the present invention includes: S1. modifying mesoporous silica-based molecular sieve with tetraethylenepentamine and organic acid in sequence to obtain material A; S2: acidifying clay mineral powder, and then aminating it with silane coupling agent to obtain material B; S3: modifying anhydrous gypsum with octadecyl hydroxy propyl sulfobetaine to obtain material C; S4: mixing materials A, B, and C using wet ball milling to obtain the adsorbent, which is used to treat waste gas generated by municipal solid waste incineration. Through the synergistic effect of each component, stable and effective adsorption of dioxins and heavy metals in the waste gas from municipal solid waste incineration can be effectively achieved.

## Description

### TECHNICAL FIELD

The present disclosure relates to the field of waste gas treatment technologies, and in particular, to an efficient adsorbent for dioxins and heavy metals in waste gas from municipal solid waste incineration and a preparation method thereof.

### BACKGROUND

During the process of waste incineration, some secondary pollutants are generated, such as particulate matter, acid gases (e.g. HCl, SO₂), dioxins, heavy metals, and volatile organic compounds (VOCs). Dioxins are a type of highly toxic organic compound, with toxicity equivalent to over 1000 times that of potassium cyanide. They are carcinogenic, mutagenic, and teratogenic to humans. Heavy metals such as mercury, lead, cadmium, etc. can also cause serious harm to human health and the environment. Therefore, how to effectively remove dioxins and heavy metals from waste incineration gas has become an important issue in the current field of environmental protection.

At present, adsorbents are generally used to treat the waste gas generated by the incineration of household waste so as to reduce the impact of pollutants in the waste gas on the environment. Adsorbents mainly include activated carbon absorbents, molecular sieve adsorbents, metal oxide adsorbents, etc. Although these absorbents can effectively adsorb pollutants in the waste gas, their adsorption capacity is limited, and they are easily affected by substances such as moisture and organic matter. Especially, household waste contains various organic matter, inorganic matter, plastics, metals, etc., which will produce multiple pollutants during the incineration process. Traditional adsorbents have weaker effects on waste gas containing multiple pollutants than single pollutants, and the adsorption costs are high, which limits the application of adsorbents.

Based on this, if a stable and effective adsorbent for adsorbing dioxins and heavy metals can be designed, it will be beneficial for the development of waste incineration waste gas treatment technology.

### SUMMARY

In response to the shortcomings of existing technology, the present invention effectively achieves stable adsorption of dioxins and heavy metals in waste gas from municipal solid waste incineration through a synergistic effect of modified molecular sieves, aminated clay minerals, and modified anhydrous gypsum.

In order to achieve the above objectives, the present invention adopts the following technical solution to solve the technical problem.

In a first aspect, the present invention provides a preparation method for an efficient adsorbent for dioxins and heavy metals in waste gas from municipal solid waste incineration, the preparation method includes the following steps:
S1: modifying mesoporous silica-based molecular sieve with tetraethylenepentamine and organic acid in sequence to obtain material A;
S2: acidifying clay mineral powder, and then aminating it with silane coupling agent to obtain material B;
S3: modifying anhydrous gypsum with octadecyl hydroxy propyl sulfobetaine to obtain material C;
S4: mixing 30-35 parts of material A, 40-50 parts of material B, and 18-23 parts of material C by mass and ball milling at a rate of 200-400 r/min for 2-4 hours to obtain the adsorbent.

In some embodiments, in step S1, preparation of material A includes the following steps:
mixing mesoporous silica-based molecular sieve, tetraethylenepentamine, and water in a feeding ratio of 1g: (6-10) mL: (25-35) mL at 90-110 °C and refluxing for 7-9 hours, after filtration, washing, and drying, adding water and refluxing, adding 23-27 wt% organic acid solution and adjusting pH to 8-9, reacting for 1-3 hours; after filtration, washing, and drying, the material A is obtained.

Preferably, the organic acid is citric acid.

In some embodiments, in step S2, preparation of material B includes the following steps:
(1) adding the clay mineral powder to a 6mol/L hydrochloric acid solution, stirring in a water bath at 75-85 °C for 2-4 hours, centrifuging after completion, washing a precipitate to neutrality, drying, grinding, screening with a 100-mesh sieve to obtain an acidified clay mineral;
(2) dispersing the acidified clay mineral in an organic solvent, adding N-(2-aminoethyl)-3-aminopropyltrimethoxysilane, and reacting in a constant temperature water bath at 75-85 °C under nitrogen protection for 32-38 hours; filtering, washing, and drying to obtain the material B.

In some embodiments, a feeding ratio of the acidified clay mineral and N-(2-aminoethyl)-3-aminopropyltrimethoxysilane is 1:1.

In some embodiments, in that in step S2, the clay mineral powder is a mixture of palygorskite, illite, and chlorite, and a mass ratio of palygorskite, illite, and chlorite is (22-27): (6-10): (10-15).

In some embodiments, the mass ratio of palygorskite, illite, and chlorite is 25:8:12.

In some embodiments, in step S3, preparation of material C includes the following steps:
adding octadecyl hydroxy propyl sulfobetaine to anhydrous ethanol and stirring to dissolve, then adding anhydrous gypsum and stirring to reflux at 60-70 °C for 3-5 hours; removing the anhydrous ethanol and drying to constant weight to obtain modified anhydrous gypsum, that is, the material C.

In some embodiments, a feeding ratio of octadecyl hydroxy propyl sulfobetaine, anhydrous ethanol, and anhydrous gypsum is (2-4): (22-27): 1.

In some embodiments, the mesoporous silica-based molecular sieve is molecular sieve SBA-15.

In a second aspect, the present invention provides an efficient adsorbent for dioxins and heavy metals in waste gas from municipal solid waste incineration that is prepared by the aforementioned preparation method.

Compared with the existing technology, the present invention has the following beneficial effects.

The present invention enhances the complexation ability with heavy metals by sequentially modifying mesoporous silica-based molecular sieve with tetraethylenepentamine and organic acids. At the same time, the clay mineral powder mixed with palygorskite, illite, and chlorite is first acidified and then aminated with silane coupling agent to further improve its adsorption capacity for dioxins and heavy metals. Simultaneously utilizing octadecyl hydroxy propyl sulfobetaine to modify anhydrous gypsum, the modified gypsum exhibits both hydrophobic and hydrophilic properties, thereby effectively adsorbing dioxins and heavy metals.

The adsorbent of the present invention can stably and effectively adsorb dioxins and heavy metals in waste incineration waste gas, with multifunctionality, thereby achieving synchronous removal of various pollutants, and providing new ideas for adsorbents for household waste incineration waste gas.

### DESCRIPTION OF EMBODIMENTS

Below is a clear and complete description of the technical solution in the embodiments of the present invention, combined with specific embodiments. Obviously, the embodiments described are only a part of the embodiments of the present invention, not all of them. Based on the embodiments of the present invention, all other embodiments obtained by those skilled in the art without creative work are within the protection scope of the present invention.

In the present invention, for numerical intervals, unless otherwise specified, the above numerical intervals are considered continuous and include the minimum and maximum values of the range, as well as every value between these minimum and maximum values. Furthermore, when the range refers to integers, it includes every integer between the minimum and maximum values of this range. Besides that, when multiple ranges are provided to describe features or characteristics, the ranges can be merged. In other words, unless otherwise specified, all scope disclosed in this specification should be understood to include any and all sub scopes included therein.

In the present invention, the specific dispersion and stirring treatment methods are not particularly limited.

In the present invention, unless otherwise specified, the experimental methods used are conventional methods. The materials, reagents, etc. used, unless otherwise specified, are commercially available reagents and materials.

### Example 1

A preparation method for an efficient adsorbent for dioxins and heavy metals in waste gas from municipal solid waste incineration includes the following steps.
1. Adding molecular sieve SBA-15, tetraethylenepentamine, and deionized water in a three necked flask at a feed ratio of 1g: 8 mL: 30 mL, refluxing (about 100 °C) for 8 hours, then cooling, filtering, washing until neutral, and vacuum drying at 70 °C for 12 hours.
2. Taking 5 g of the molecular sieve dried in step 1 and adding it to 100 mL of deionized water for reflux (about 100 °C). Then, adding 100mL of 25 % citric acid solution within 1 hour, and adding sodium bicarbonate to maintain a pH of a reaction mixture at 9; continue reacting for 2 hours, after the reaction is complete, cooling, filtering, washing with deionized water until neutral, and vacuum drying at 70 °C for 12 hours to obtain modified molecular sieve.
3. Weighing 50 g of clay mineral powder and adding it to 200mL of 6 mol/L hydrochloric acid solution, stirring and reacting in an 80 °C water bath for 3 hours at a stirring rate of 300 rpm, after the reaction is complete, centrifuging and washing a precipitate with deionized water until the pH is neutral, then drying to constant weight to obtain acidified clay mineral.
4. Dispersing 10 g of acidified clay mineral in 250 mL of methanol solution, adding 10 mL of N-(2-aminoethyl)-3-aminopropyltrimethoxysilane with stirring, and reacting at 80 °C for 35 hours in a constant temperature water bath under nitrogen protection; filtering, washing, and drying the above reaction solution to obtain aminated clay mineral.
   The clay mineral powder is a mixture of palygorskite, illite, and chlorite, a mass ratio of palygorskite, illite, and chlorite is 25:8:12. The mixture of palygorskite, illite, and chlorite is crushed and screened with a 200-mesh sieve.
5. Adding octadecyl Hydroxy Propyl Sulfobetaine (DHSB) to anhydrous ethanol, stirring and dissolving, then adding anhydrous gypsum and stirring at 65 °C for 4 hours for reflux. Afterwards, heating up to remove anhydrous ethanol, drying to constant weight to obtain modified anhydrous gypsum. A feeding ratio of octadecyl hydroxy propyl sulfobetaine, anhydrous ethanol, and anhydrous gypsum is 4 g: 25 mL: 1 g.
6. Mixing 32 parts of modified molecular sieve, 45 parts of aminated clay mineral, and 20 parts of modified anhydrous gypsum by mass to obtain grinding material. The grinding material, anhydrous ethanol, and zirconia beads were added to a ball mill in a ratio of 1 g: 2 mL: 10 g for wet grinding. During grinding, zirconia beads with a Mohs hardness of 9 (diameter of 20mm) were selected and ball milled at a rate of 300 r/min for 3 hours to obtain the adsorbent.

### Example 2

A preparation method for an efficient adsorbent for dioxins and heavy metals in waste gas from municipal solid waste incineration includes the following steps.
1. Adding molecular sieve SBA-15, tetraethylenepentamine, and deionized water into a three necked flask at a feed ratio of 1 g: 10 mL: 35 mL, refluxing (about 100 °C) for 7 hours, after this, cooling, filtering, washing until neutral, and vacuum drying at 70 °C for 12 hours.
2. Taking 5 g of the molecular sieve dried in step 1 and adding it to 100 mL of deionized water for reflux (about 100 °C). Then, adding 100 mL of citric acid solution with a mass fraction of 23 % within 1 hour, and adding sodium bicarbonate to maintain a pH of a reaction mixture at 8; continue reacting for 3 hours, after the reaction is complete, cooling, filtering, washing with deionized water until neutral, and vacuum drying at 70 °C for 12 hours to obtain modified molecular sieve.
3. Weighing 50 g of clay mineral powder and adding it to 200 mL of 6 mol/L hydrochloric acid solution, stirring and reacting in an 85 °C water bath for 4 hours at a stirring rate of 300 rpm, after the reaction is complete, centrifuging and washing a precipitate with deionized water until the pH is neutral, then drying at 80 °C to constant weight, meshing with a 100-mesh sieve to obtain acidified clay minerals.
4. Dispersing 10 g of acidified clay mineral in 250 mL of methanol solution, adding 10 mL of N-(2-aminoethyl)-3-aminopropyltrimethoxysilane with stirring, and reacting in a constant temperature water bath at 85 °C for 32 hours under nitrogen protection; filtering, washing, and drying the above reaction solution to obtain aminated clay mineral.
   The clay mineral powder is a mixture of palygorskite, illite, and chlorite, a mass ratio of palygorskite, illite, and chlorite is 27:6:10. The mixture of palygorskite, illite, and chlorite is crushed and screened with a 200-mesh sieve.
5. Adding octadecyl Hydroxy Propyl Sulfobetaine (DHSB) to anhydrous ethanol, stirring and dissolving, and then adding anhydrous gypsum and stirring at 60 °C for 5 hours under reflux. Subsequently, heating up to remove anhydrous ethanol, drying to constant weight to obtain modified anhydrous gypsum. A feeding ratio of octadecyl hydroxy propyl sulfobetaine, anhydrous ethanol, and anhydrous gypsum is 2 g: 27 mL: 1 g.
6. Mixing 30 parts of modified molecular sieve, 50 parts of aminated clay mineral, and 18 parts of modified anhydrous gypsum by mass to obtain grinding material. Adding the grinding material, anhydrous ethanol, and zirconia beads to a ball mill in a ratio of 1 g: 2 mL: 10 g for wet grinding. During grinding, zirconia beads with a Mohs hardness of 9 (diameter of 20mm) were selected and ball milled at a rate of 200 r/min for 4 hours to obtain the adsorbent.

### Example 3

A preparation method for an efficient adsorbent for dioxins and heavy metals in waste gas from municipal solid waste incineration includes the following steps.
1. Adding molecular sieve SBA-15, tetraethylenepentamine, and deionized water into a three necked flask at a feed ratio of 1 g: 10 mL: 35 mL and reflux (about 100 °C) for 9 hours, after this, cooling, filtering, washing until neutral, and vacuum drying at 70 °C for 12 hours.
2. Taking 5 g of the molecular sieve dried in step 1 and adding it to 100 mL of deionized water for reflux (about 100 °C). Then, adding 100 mL of citric acid solution with a mass fraction of 27 % within 1 hour, and adding sodium bicarbonate to maintain a pH of a reaction mixture at 9; continue reacting for 1 hour, after the reaction is complete, cooling, filtering, washing with deionized water until neutral, and vacuum drying at 70 °C for 12 hours to obtain modified molecular sieve.
3. Weighing 50 g of clay mineral powder and adding it to 200 mL of 6 mol/L hydrochloric acid solution; stirring and reacting in a 75 °C water bath for 2 hours at a stirring rate of 300 rpm; after the reaction is complete, centrifuging and washing a precipitate with deionized water until the pH is neutral; then drying at 80 °C to constant weight, meshed with a 100-mesh sieve to obtain acidified clay minerals.
4. Dispersing 10g of acidified clay mineral in 250 mL of methanol solution, adding 10mL of N-(2-aminoethyl)-3-aminopropyltrimethoxysilane with stirring, and reacting in a constant temperature water bath at 75 °C for 38 hours under nitrogen protection; filtering, washing, and drying the above reaction solution to obtain aminated clay mineral.
   The clay mineral powder is a mixture of palygorskite, illite, and chlorite, a mass ratio of palygorskite, illite, and chlorite is 22:10:15. The mixture of palygorskite, illite, and chlorite is crushed and screened with a 200-mesh sieve.
5. Adding octadecyl Hydroxy Propyl Sulfobetaine (DHSB) to anhydrous ethanol, stirring and dissolving, then adding anhydrous gypsum and stirring at 70 °C for 3 hours under reflux. Afterwards, heating up to remove anhydrous ethanol, drying to constant weight to obtain modified anhydrous gypsum. A feeding ratio of octadecyl hydroxy propyl sulfobetaine, anhydrous ethanol, and anhydrous gypsum is 4 g: 22 mL: 1 g.
6. Mixing 35 parts of modified molecular sieve, 40 parts of aminated clay mineral, and 23 parts of modified anhydrous gypsum by mass to obtain grinding material. Adding the grinding material, anhydrous ethanol, and zirconia beads to a ball mill in a ratio of 1 g: 2 mL: 10 g for wet grinding. During grinding, zirconia beads with a Mohs hardness of 9 (diameter of 20mm) were selected and ball milled at a rate of 400 r/min for 2 hours to obtain the adsorbent.

### Comparative Example 1

A difference between Comparative Example 1 and Example 1 is that an equal amount of molecular sieve SBA-15 is used instead of the modified molecular sieve in Comparative Example 1, and the others are the same.

### Comparative Example 2

A difference between Comparative Example 2 and Example 1 is that no modified molecular sieve is added to Comparative Example 2, and the others are the same.

### Comparative Example 3

A difference between Comparative Example 3 and Example 1 is that an equal amount of montmorillonite powder is used to replace the aminated clay mineral in Comparative Example 3, and the others are the same.

### Comparative Example 4

A difference between Comparative Example 4 and Example 1 is that an equal amount of clay mineral powder is used to replace the aminated clay mineral in Comparative Example 4, and the others are the same.

The clay mineral powder is a mixture of palygorskite, illite, and chlorite, a mass ratio of palygorskite, illite, and chlorite is 25:8:12. The mixture of palygorskite, illite, and chlorite is crushed and meshed with a 200-mesh sieve.

### Test Example 1

The adsorbents prepared in Examples 1-3 and Comparative Examples 1-4 will be used for adsorption treatment of flue gas containing dioxins and heavy metals, as follows.

At the municipal solid waste incineration plant, the exhaust gas purification treatment is carried out using "SNCR + Semi-dry deacidification + flue silica-based adsorbent spraying + BDC (bag dust-cleaning)" method. Adsorbents prepared in Examples 1-3 and Comparative Examples 1-4 were added at a waste volume of 0.5 kg/t, with an incineration treatment capacity of 500 t/d. Dioxins and heavy metals were detected before and after the exhaust gas purification treatment according to the method of GB 18485-2014 "Standard for pollution control on the municipal solid waste incineration", they were repeated three times. Then, the removal rate of dioxins and heavy metals by the adsorbents was calculated based on the concentration before and after treatment. The adsorption test results were shown in Table 1-4.

**Table 1 Results of Dioxin Adsorption Test**

| Groups | Dioxin (ng TEQ/m³) | | Removal rate (%) |
|---|---|---|---|
| | Before Treatment | After treatment | |
| Example 1 | 0.47 | 0.0053 | 98.87 |
| Example 2 | 0.56 | 0.0061 | 98.91 |
| Example 3 | 0.59 | 0.0074 | 98.75 |
| Comparative Example 1 | 0.53 | 0.085 | 83.96 |
| Comparative Example 2 | 0.47 | 0.098 | 79.15 |
| Comparative Example 3 | 0.48 | 0.093 | 80.63 |
| Comparative Example 4 | 0.54 | 0.089 | 83.52 |

**Table 2 Adsorption test results of mercury and its compounds**

| Groups | Mercury and its compounds (mg/m³) | | Removal rate (%) |
|---|---|---|---|
| | Before Treatment | After treatment | |
| Example 1 | 0.0109 | ND | 100.00 |
| Example 2 | 0.0223 | ND | 100.00 |
| Example 3 | 0.0322 | 0.319×10⁻³ | 99.01 |
| Comparative Example 1 | 0.0207 | 5.01×10⁻³ | 75.80 |
| Comparative Example 2 | 0.0215 | 6.41×10⁻³ | 70.19 |
| Comparative Example 3 | 0.0267 | 7.98×10⁻³ | 70.11 |
| Comparative Example 4 | 0.0330 | 5.07×10⁻³ | 84.64 |

| | | | |
|---|---|---|---|
| Note: "ND" refers to less than a detection limit or not detected. | | | |

**Table 3 Adsorption test results of cadmium/thallium and its compounds**

| Groups | Cadmium/Thallium and Its Compounds (mg/m³) | | Removal rate (%) |
|---|---|---|---|
| | Before Treatment | After treatment | |
| Example 1 | 0.0969 | ND | 100.00 |
| Example 2 | 0.125 | 5.90×10⁻⁴ | 99.53 |
| Example 3 | 0.105 | 1.27×10⁻⁴ | 99.88 |
| Comparative Example 1 | 0.0896 | 1.90×10⁻² | 78.79 |
| Comparative Example 2 | 0.101 | 3.69×10⁻² | 63.47 |
| Comparative Example 3 | 0.115 | 3.78×10⁻² | 67.13 |
| Comparative Example 4 | 0.108 | 3.16×10⁻² | 70.74 |

| | | | |
|---|---|---|---|
| Note: "ND" refers to less than the detection limit or not detected. | | | |

**Table 4 Adsorption test results of antimony/arsenic/lead/chromium/copper/cobalt/manganese/nickel and their compounds**

| .Groups | Antimony/arsenic/lead/chromium/copper/cobalt/ manganese/nickel and their compounds (mg/m³) | | Removal rate (%) |
|---|---|---|---|
| | Before Treatment | After treatment | |
| Example 1 | 2.24 | 1.08×10⁻² | 99.52 |
| Example 2 | 2.15 | 5.59×10⁻³ | 99.74 |
| Example 3 | 2.30 | 7.58×10⁻³ | 99.67 |
| Comparative Example 1 | 1.81 | 0.505 | 72.10 |
| Comparative Example 2 | 2.18 | 0.848 | 61.10 |
| Comparative Example 3 | 2.13 | 0.719 | 66.24 |
| Comparative Example 4 | 2.11 | 0.594 | 71.85 |

According to Table 1-4, compared to Comparative Examples 1-4, the adsorbents prepared in Examples 1-3 have better adsorption effects on dioxins and heavy metals in waste incineration exhaust gas; comparing Comparative Examples 1 and 2 with Example 1, the removal efficiency of dioxins and heavy metals by the adsorbent prepared by replacing or not adding modified molecular sieves with common molecular sieves was significantly lower than that of Example 1, which indicates that the modification of mesoporous silica-based molecular sieves by tetraethylenepentamine and citric acid can improve the adsorption efficiency of dioxins and heavy metals. Then, comparing Comparative Examples 3, 4 and Example 1, it can be seen that the adsorbent with common montmorillonite or non-aminated clay mineral mixed powder has a lower removal rate for dioxins and heavy metals. This indicates that the adsorbent of the present invention, under the action of each component, replacing or reducing any component will affect the balance of the adsorbent system and thus affect the adsorption effect.

Furthermore, it should be noted that although this specification is described according to the embodiments, not every embodiment contains an independent technical solution. This description in the specification is only for clarity, and those skilled in the art should consider the specification as a whole. The technical solutions in each embodiment can also be appropriately combined to form other embodiments that those skilled in the art can understand.

## Claims

1. A preparation method for an efficient adsorbent for dioxins and heavy metals in waste gas from municipal solid waste incineration, **characterized in that** the preparation method comprises the following steps:
S1: modifying mesoporous silica-based molecular sieve with tetraethylenepentamine and organic acid in sequence to obtain material A;
S2: acidifying clay mineral powder, and then aminating it with silane coupling agent to obtain material B;
S3: modifying anhydrous gypsum with octadecyl hydroxy propyl sulfobetaine to obtain material C;
S4: mixing 30-35 parts of material A, 40-50 parts of material B, and 18-23 parts of material C by mass and ball milling at a rate of 200-400 r/min for 2-4 hours to obtain the adsorbent.

2. The preparation method according to claim 1, **characterized in that** in step S1, preparation of material A comprises the following steps:
mixing mesoporous silica-based molecular sieve, tetraethylenepentamine, and water in a feeding ratio of 1 g: (6-10) mL: (25-35) mL at 90-110 °C and refluxing for 7-9 hours, after filtration, washing, and drying, adding water and refluxing, adding 23-27 wt% organic acid solution and adjusting pH to 8-9, reacting for 1-3 hours; after filtration, washing, and drying, the material A is obtained.

3. The preparation method according to claim 1, **characterized in that** in step S2, preparation of material B comprises the following steps:
(1) adding the clay mineral powder to a 6mol/L hydrochloric acid solution, stirring in a water bath at 75-85 °C for 2-4 hours, centrifuge after completion, washing a precipitate to neutrality, drying, grinding, screening with a 100-mesh sieve to obtain an acidified clay mineral;
(2) dispersing the acidified clay mineral in an organic solvent, adding N-(2-aminoethyl)-3-aminopropyltrimethoxysilane, and reacting in a constant temperature water bath at 75-85 °C under nitrogen protection for 32-38 hours; filtering, washing, and drying to obtain the material B.

4. The preparation method according to claim 3, **characterized in that** a feeding ratio of the acidified clay mineral and N-(2-aminoethyl)-3-aminopropyltrimethoxysilane is 1:1.

5. The preparation method according to claim 1, **characterized in that** in step S2, the clay mineral powder is a mixture of palygorskite, illite, and chlorite, and a mass ratio of palygorskite, illite, and chlorite is (22-27): (6-10): (10-15).

6. The preparation method according to claim 5, **characterized in that** the mass ratio of palygorskite, illite, and chlorite is 25:8:12.

7. The preparation method according to claim 1, **characterized in that** in step S3, preparation of material C comprises the following steps:
adding octadecyl hydroxy propyl sulfobetaine to anhydrous ethanol and stirring to dissolve, then adding anhydrous gypsum and stirring to reflux at 60-70 °C for 3-5 hours; removing the anhydrous ethanol and drying to constant weight to obtain the material C.

8. The preparation method according to claim 7, **characterized in that** a feeding ratio of octadecyl hydroxy propyl sulfobetaine, anhydrous ethanol, and anhydrous gypsum is (2-4): (22-27): 1.

9. The preparation method according to claim 1, **characterized in that** the mesoporous silica-based molecular sieve is molecular sieve SBA-15.

10. An efficient adsorbent for dioxins and heavy metals in waste gas from municipal solid waste incineration, which is prepared by the preparation method according to any one of claims 1-9.

## Amended claims

### Amended claims in accordance with Rule 137(2) EPC.

1. A preparation method for an efficient adsorbent for dioxins and heavy metals in waste gas from municipal solid waste incineration, **characterized in that** the preparation method comprises the following steps:
S1: modifying mesoporous silica-based molecular sieve with tetraethylenepentamine and organic acid in sequence to obtain material A;
S2: acidifying clay mineral powder, and then aminating it with silane coupling agent to obtain material B;
S3: modifying anhydrous gypsum with octadecyl hydroxy propyl sulfobetaine to obtain material C;
S4: mixing 30-35 parts of material A, 40-50 parts of material B, and 18-23 parts of material C by mass and ball milling at a rate of 200-400 r/min for 2-4 hours to obtain the adsorbent.

2. The preparation method according to claim 1, **characterized in that** in step S1, preparation of material A comprises the following steps:
mixing mesoporous silica-based molecular sieve, tetraethylenepentamine, and water in a feeding ratio of 1 g: (6-10) mL: (25-35) mL at 90-110 °C and refluxing for 7-9 hours, after filtration, washing, and drying, adding water and refluxing, adding 23-27 wt% organic acid solution and adjusting pH to 8-9, reacting for 1-3 hours; after filtration, washing, and drying, the material A is obtained.

3. The preparation method according to claim 1, **characterized in that** in step S2, preparation of material B comprises the following steps:
(1) adding the clay mineral powder to a 6mol/L hydrochloric acid solution, stirring in a water bath at 75-85 °C for 2-4 hours, centrifuge after completion, washing a precipitate to neutrality, drying, grinding, screening with a 100-mesh sieve to obtain an acidified clay mineral;
(2) dispersing the acidified clay mineral in an organic solvent, adding N-(2-aminoethyl)-3-aminopropyltrimethoxysilane, and reacting in a constant temperature water bath at 75-85 °C under nitrogen protection for 32-38 hours; filtering, washing, and drying to obtain the material B.

4. The preparation method according to claim 3, **characterized in that** a feeding ratio of the acidified clay mineral and N-(2-aminoethyl)-3-aminopropyltrimethoxysilane is 1:1.

5. The preparation method according to claim 1, **characterized in that** in step S2, the clay mineral powder is a mixture of palygorskite, illite, and chlorite, and a mass ratio of palygorskite, illite, and chlorite is (22-27): (6-10): (10-15).

6. The preparation method according to claim 5, **characterized in that** the mass ratio of palygorskite, illite, and chlorite is 25:8:12.

7. The preparation method according to claim 1, **characterized in that** in step S3, preparation of material C comprises the following steps:
adding octadecyl hydroxy propyl sulfobetaine to anhydrous ethanol and stirring to dissolve, then adding anhydrous gypsum and stirring to reflux at 60-70 °C for 3-5 hours; removing the anhydrous ethanol and drying to constant weight to obtain the material C.

8. The preparation method according to claim 7, **characterized in that** a feeding ratio of octadecyl hydroxy propyl sulfobetaine, anhydrous ethanol, and anhydrous gypsum is (2-4): (22-27): 1.

9. The preparation method according to claim 1, **characterized in that** the mesoporous silica-based molecular sieve is molecular sieve SBA-15.

10. An efficient adsorbent for dioxins and heavy metals in waste gas from municipal solid waste incineration, which is prepared by the preparation method according to any one of claims 1-9; wherein the adsorbent is prepared by mesoporous silica-based molecular sieve modified with tetraethylenepentamine, clay mineral powder aminated with a silane coupling agent being N-(2-aminoethyl)-3-aminopropyltrimethoxysilane and anhydrous gypsum modified with octadecyl hydroxy propyl sulfobetaine with a mass ratio of 30-35 : 40-45 : 18:23.
